# EUROPÄISCHE PATENTANMELDUNG

(11) **EP 4 109 414 A1**
(43) Veröffentlichungstag der Anmeldung: **28.12.2022**
(21) Anmeldenummer: 22156924.7
(22) Anmeldetag: 16.02.2022
(51) Int. Cl.: G06V 10/82, G06V 20/69, G06V 10/10

(54) **VERFAHREN ZUR BESTIMMUNG EINES INDIKATORS FÜR EINE AUFBEREITUNGSQUALITÄT EINES LANDWIRTSCHAFTLICHEN ERNTEGUTS**

(30) Priorität: 22.06.2021 DE 102021116117
(71) Anmelder: CLAAS Selbstfahrende Erntemaschinen GmbH, 33428 Harsewinkel (DE)
(72) Erfinder: Belau, Sven Carsten, 33332 Gütersloh (DE); Fischer, Frédéric, 59759 Arnsberg (DE); Heitmann, Christoph, 48231 Warendorf (DE); Bönig Dr., Ingo, 33330 Gütersloh (DE)
(74) Vertreter: CLAAS Gruppe

(57) **Zusammenfassung**

Die Erfindung betrifft ein Verfahren zur Bestimmung eines Indikators (I) für eine Aufbereitungsqualität eines landwirtschaftlichen Ernteguts (1) mittels eines Mobilgeräts (7), insbesondere eines Smartphones oder Tablets, wobei das Mobilgerät (7) eine Recheneinheit (9) aufweist und/oder mit der Recheneinheit (9) kommuniziert. Es wird vorgeschlagen, dass die Recheneinheit (9) Bilddaten (10) einer vorbereiteten, Kornbestandteile (5) und Nicht-Kornbestandteile (6) umfassenden, Probe des Ernteguts (1) in einer Analyseroutine (11) analysiert, um den Indikator (I) für die Aufbereitungsqualität des Ernteguts (1) zu bestimmen und dass die Recheneinheit (9) in der Analyseroutine (11) ein trainiertes Maschinenlernmodell (15) anwendet, um zumindest einen Schritt der Bestimmung des Indikators (I) für die Aufbereitungsqualität des Ernteguts (1) durchzuführen.

## Beschreibung

Die Erfindung betrifft ein Verfahren zur Bestimmung eines Indikators für eine Aufbereitungsqualität eines landwirtschaftlichen Ernteguts gemäß dem Oberbegriff von Anspruch 1, ein Trainingsverfahren zur Erzeugung eines Trainingsdatensatzes eines Maschinenlernmodells gemäß Anspruch 13, ein Speichermedium mit einem darauf gespeicherten Trainingsdatensatz gemäß Anspruch 16, eine Recheneinheit eingerichtet zur Durchführung eines Analyseschritts und/oder einer Analyseroutine gemäß Anspruch 17 sowie ein Mobilgerät eingerichtet zur Verwendung in einem derartigen Verfahren gemäß Anspruch 18.

Das in Rede stehende landwirtschaftliche Erntegut kann jegliche Art von landwirtschaftlichem Erntegut sein. Im Vordergrund steht vorliegend das mittels eines Feldhäckslers gewonnene Erntegut.

Feldhäcksler ernten einen Feldbestand von einem Feld ab und verarbeiten das so gewonnene Erntegut mittels einer Reihe von Arbeitsaggregaten. Ein primäres und vorliegend besonders interessantes Einsatzgebiet von Feldhäckslern ist die Ernte von Mais. Bei dieser Ernte wird häufig mittels des Feldhäckslers die gesamte Maispflanze inklusive der Maiskolben aufgenommen und gehäckselt. Das so gewonnene Erntegut wird insbesondere zur Fütterung von Nutztieren, vor allem Wiederkäuern, verwendet. Eine alternative Verwendungsmöglichkeit ist die Nutzung in Biogasanlagen.

Besonders bei der Verwendung des Ernteguts als Futtermittel für Tiere und bei der Verwendung in Biogasanlagen ist wichtig, dass die Kornbestandteile des Ernteguts aufgeschlossen, also zerkleinert, werden. Wichtig ist das Aufschließen der Kornbestandteile, damit die darin enthaltene Stärke zugänglich wird und nicht durch die Hülle des Kornbestandteils geschützt wird. Das Aufschließen der Kornbestandteile geschieht einerseits durch das Häckseln des Ernteguts und andererseits wesentlich durch einen Corncracker des Feldhäckslers. Dieser Corncracker kann zwar so eingestellt werden, dass mit Sicherheit alle Kornbestandteile stark zerkleinert sind, eine derartige Einstellung verbraucht jedoch unnötig viel Kraftstoff.

Unter dem Begriff Silage Snap App ist ein Verfahren bekannt, bei dem ein Indikator für eine Aufbereitungsqualität eines Kornbestandteils, speziell von Maiskörnern, eines landwirtschaftlichen Ernteguts mittels eines Mobilgeräts, wie eines Smartphones bestimmt wird. Bei dem bekannten Verfahren müssen die Maiskörner aus dem Erntegut ausgewaschen, manuell voneinander getrennt und auf einen bekannten Hintergrund verteilt werden. Anschließend wird mittels des Mobilgeräts ein Foto aufgenommen und anhand dieses Fotos wird eine Approximation des Corn-Silage-Processing-Scores (CSPS) bestimmt.

Trotz der aufwendigen manuellen Sortierung, führt die Regression des bestimmten Indikators für die Aufbereitungsqualität zu Ergebnissen, die noch Raum für eine Optimierung lassen.

Aus der EP 2 982 223 B1 und der EP 3 646 703 A1 sind Verfahren zur Analyse von Erntegut bekannt, die mittels einer dedizierten, auf einem Feldhäcksler angebrachten Kamera durchgeführt werden. Derartige Kameras sind teuer und die Verfahren aufwändig. Aus der US 4 975 863 A ist allgemein ein Verfahren zur Bildanalyse von Partikeln bekannt, in dem die Partikel aufwändig separiert werden. Schließlich ist aus der EP 261 920 A1 ein allgemeines Verfahren zur Analyse von Erntegut bekannt.

Es besteht daher ein Bedarf nach einem kostengünstigen, weniger aufwändigen und/oder genaueren Verfahren zur Bestimmung eines Indikators für eine Aufbereitungsqualität eines landwirtschaftlichen Ernteguts.

Der Erfindung liegt das Problem zugrunde, das bekannte Verfahren derart auszugestalten und weiterzubilden, dass die Ermittlung des Indikators für die Aufbereitungsqualität eines landwirtschaftlichen Ernteguts vereinfacht und/oder verbessert wird.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, dass eine vorbereitete Probe, die Kornbestandteile und Nicht-Kornbestandteile umfasst, mittels eines trainierten Maschinenlernmodells analysiert werden kann.

Im Einzelnen wird vorgeschlagen, dass die Recheneinheit Bilddaten einer vorbereiteten, Kornbestandteile und Nicht-Kornbestandteile umfassenden, Probe des Ernteguts in einer Analyseroutine analysiert, um den Indikator für die Aufbereitungsqualität des Ernteguts zu bestimmen und dass die Recheneinheit in der Analyseroutine ein trainiertes Maschinenlernmodell anwendet, um zumindest einen Schritt der Bestimmung des Indikators für die Aufbereitungsqualität des Ernteguts durchzuführen.

Durch den Entfall des aufwendigen manuellen Aussortierens der Kornbestandteile aus der Probe, wird das vorschlagsgemäße Verfahren deutlich einfacher. Hinzu kommt, dass die Möglichkeit gegeben ist, auch die Nicht-Kornbestandteile zu analysieren. Weiterhin hat sich gezeigt, dass durch die Nutzung eines trainierten Maschinenlernmodells ein höheres Bestimmtheitsmaß bei der Regression auf den im Labor ermittelten CSPS erreichbar ist. Zwar wäre grundsätzlich zu erwarten, dass eine manuelle Separierung der Kornbestandteile wie bei dem bekannten Stand der Technik der Silage Snap App zu einer größtmöglichen Genauigkeit führt, allerdings hat sich dies nicht bestätigt.

Bei den besonders bevorzugten Ausgestaltungen gemäß Anspruch 2 sind die Kornbestandteile Mais und/oder ist der Indikator für die Aufbereitungsqualität ein Indikator für die Aufbereitungsqualität der Kornbestandteile. Gerade beim Maishäckseln ist die Aufbereitungsqualität der Kornbestandteile von wesentlicher Bedeutung.

Gemäß Anspruch 3 führt die Recheneinheit in der Analyseroutine vorzugsweise einen Klassifikationsschritt auf den Bilddaten durch, insbesondere unter Verwendung des trainierten Maschinenlernmodells. So werden diejenigen Bildregionen ermittelt, die den Kornbestandteilen zugeordnet sind. Auf diesen Bildregionen kann dann im Weiteren Analytik vorgenommen werden.

Bevorzugt basiert der Klassifikationsschritt auf einer semantischen Segmentierung (Anspruch 4). Die Nutzung einer semantischen Segmentierung in dem Klassifikationsschritt trägt dem Umstand Rechnung, dass Kornbestandteile im Mittel wenig dicht über eine Probe des Ernteguts verteilt sind, sodass selten mehrere Kornbestandteile überlappen. Weiterhin ist die Erkennung der Kornbestandteile wenig kontextabhängig, wodurch ein kleines und effizientes Maschinenlernmodell verwendet werden kann.

Anspruch 5 trägt dem Umstand Rechnung, dass die Komplexität des vorschlagsgemäßen Verfahrens in der Segmentierung bzw. Klassifikation liegt. Die anschließende Analyse erschöpft sich vorzugsweise in einer Betrachtung der geometrischen Größen der ermittelten Bildregionen. Dabei kann insbesondere auf eine kleinste Hauptachse eines minimalen umgebenden Rechtecks abgestellt werden, da diese auch bei dem Siebverfahren der CSPS-Bestimmung dafür verantwortlich ist, ob ein Kornbestandteil durch das Sieb fällt. Insbesondere bei dem Versuch, nah an die Laborbestimmung des CSPS zu gelangen, ist diese Analyse daher vorteilhaft.

Aufgrund des bevorzugt niedrig komplexen Analyseschritts kann gemäß Anspruch 6 vorgesehen sein, dass dieser nicht auf einem Maschinenlernverfahren basiert.

Anspruch 7 gibt eine bevorzugte Bestimmung des Indikators der Aufbereitungsqualität in Analogie zum CSPS an.

Anspruch 8 betrifft eine bevorzugte Architektur des Maschinenlernmodells. Besonders ein fully convolutional network liefert, insbesondere für die semantische Segmentierung, gute Ergebnisse.

Anspruch 9 betrifft bevorzugte Ausgestaltungen eines Vorverarbeitungsschritts. Durch eine gute Vorverarbeitung der Bilddaten können sowohl ein einfacheres Maschinenlernmodell verwendet werden als auch bessere Ergebnisse erzielt werden. Insbesondere eine Korrektur einer Perspektive eines Bildes ist bei der Betrachtung geometrischer Größen vorteilhaft. Das Teilen eines Bildes in mindestens zwei, vorzugsweise mindestens vier, Subbilder ermöglicht die Anwendung eines weniger komplexen Maschinenlernmodells auf die so erhaltenen kleineren Subbilder. Da bei der vorliegenden Aufgabe wenig bis keine Informationen in einem globalen Kontext vorhanden sind, lässt sich so einfach und ohne Qualitätsverlust eine erhöhte Effizienz erzielen.

Bei einer Ausgestaltung gemäß Anspruch 10 weist die Recheneinheit eine Mobilgerät-Recheneinheit und eine Server-Recheneinheit auf. Je nachdem ob die Analyseroutine auf einem Server oder dem Mobilgerät durchgeführt wird, lassen sich entweder komplexere Operationen durchführen oder eine Offline-Fähigkeit erreichen.

In einem einzelnen Bild einer Probe eines Ernteguts sind bei hinreichender Auflösung relativ wenige Kornbestandteile vorhanden. Aufgrund einer hohen Homogenität des Ernteguts hinsichtlich des Kornaufschlusses ist es jedoch unproblematisch, mehrere Bilder unterschiedlicher Proben eines homogenen, zu vermessenden Ernteguts in den Bilddaten zu kombinieren. Durch die Analyse mehrerer Bilder lässt sich statistisch betrachtet eine höhere Genauigkeit erzielen. Dabei haben sich Bilddaten als vorteilhaft erwiesen, in denen mindestens 100 bis 200 Kornpartikel vorhanden sind. Die entsprechenden Überlegungen sind Gegenstand von Anspruch 11.

Bei einer Ausgestaltung gemäß Anspruch 12 ist die vorbereitete Probe eine Probe auf einem definierten Hintergrund, der vorzugsweise eine Größenreferenz und/oder eine definierte Farbe aufweist. Mittels der Größenreferenz lassen sich auf einfache Art und Weise die geometrischen Abmessungen in Form des Größenwerts ermitteln. Die definierte Farbe ermöglicht eine einfache Trennung von Vordergrund und Hintergrund in den Bilddaten.

Nach einer weiteren Lehre gemäß Anspruch 13, der eigenständige Bedeutung zukommt, wird ein Trainingsverfahren zur Erzeugung eines Trainingsdatensatzes eines Maschinenlernmodells beansprucht. Der Trainingsdatensatz kann in dem vorschlagsgemäßen Verfahren verwendet werden. Auf alle Ausführungen zu dem vorschlagsgemäßen Verfahren darf verwiesen werden.

Bei einer Ausgestaltung gemäß Anspruch 14 ist die Kostenfunktion eine dice-loss-Funktion und/oder berücksichtigt eine Abweichung des Indikators für die Aufbereitungsqualität von einem Referenz-Indikator für die Aufbereitungsqualität. Da in den Trainingsdaten, sofern diese realitätsnah sind, weniger Kornpartikel pro Gesamtbildfläche vorhanden sind, lassen sich mittels der dice-loss-Funktion, die bei ungleich verteilten Klassen eine Berücksichtigung der Ergebnisse der selten vorhandenen Klassen sicherstellt, gute Ergebnisse erzielen. Da vorliegend jedoch weniger die korrekte Segmentierung jedes Pixels im Vordergrund steht, sondern vielmehr die korrekte Ermittlung zusammenhängender Bildregionen von etwa der korrekten Größe relevant ist, kann durch einen Vergleich zwischen der Abweichung des Indikators für die Aufbereitungsqualität, berechnet unter Zugrundelgung des jeweiligen Trainingsstands, von einem Referenz-Indikator für die Aufbereitungsqualität die Kostenfunktion verbessert werden.

Anspruch 15 gibt bevorzugte Mengen trainierbarer Parameter des Maschinenlernmodells an.

Nach einer weiteren Lehre gemäß Anspruch 16, der ebenfalls eigenständige Bedeutung zukommt, wird ein Speichermedium mit einem darauf gespeicherten Trainingsdatensatz erzeugt mittels des vorschlagsgemäßen Trainingsverfahrens beansprucht. Auf alle Ausführungen zu dem vorschlagsgemäßen Trainingsverfahren darf verwiesen werden.

Nach einer weiteren Lehre gemäß Anspruch 17, der ebenfalls eigenständige Bedeutung zukommt, wird eine Recheneinheit eingerichtet zur Durchführung des Analyseschritts und/oder der Analyseroutine und/oder des Trainingsverfahrens beansprucht. Auf alle Ausführungen zu dem vorschlagsgemäßen Verfahren und dem vorschlagsgemäßen Trainingsverfahren darf verwiesen werden.

Nach einer weiteren Lehre gemäß Anspruch 18, der ebenfalls eigenständige Bedeutung zukommt, wird ein Mobilgerät eingerichtet zur Verwendung in dem vorschlagsgemäßen Verfahren beansprucht. Auf alle Ausführungen zu dem vorschlagsgemäßen Verfahren darf verwiesen werden.

Im Folgenden wird die Erfindung anhand einer lediglich Ausführungsbeispiele darstellenden Zeichnung näher erläutert. In der Zeichnung zeigt:
- Fig. 1: einen Feldhäcksler und ein Mobilgerät in einer Anwendungssituation des vorschlagsgemäßen Verfahrens,
- Fig. 2: schematisch den Ablauf des vorschlagsgemäßen Verfahrens, und
- Fig. 3: schematisch die vorschlagsgemäße Analyseroutine.

Das vorschlagsgemäße Verfahren zur Bestimmung eines Indikators I für eine Aufbereitungsqualität eines landwirtschaftlichen Ernteguts 1 wird anhand der Figuren näher erläutert. Ein bevorzugtes Ausführungsbeispiel betrifft dabei die Anwendung bei einem Feldhäcksler 2. Bei dem Erntegut 1 kann es sich dann um gehäckselte Pflanzen handeln, insbesondere um gehäckselte Maispflanzen.

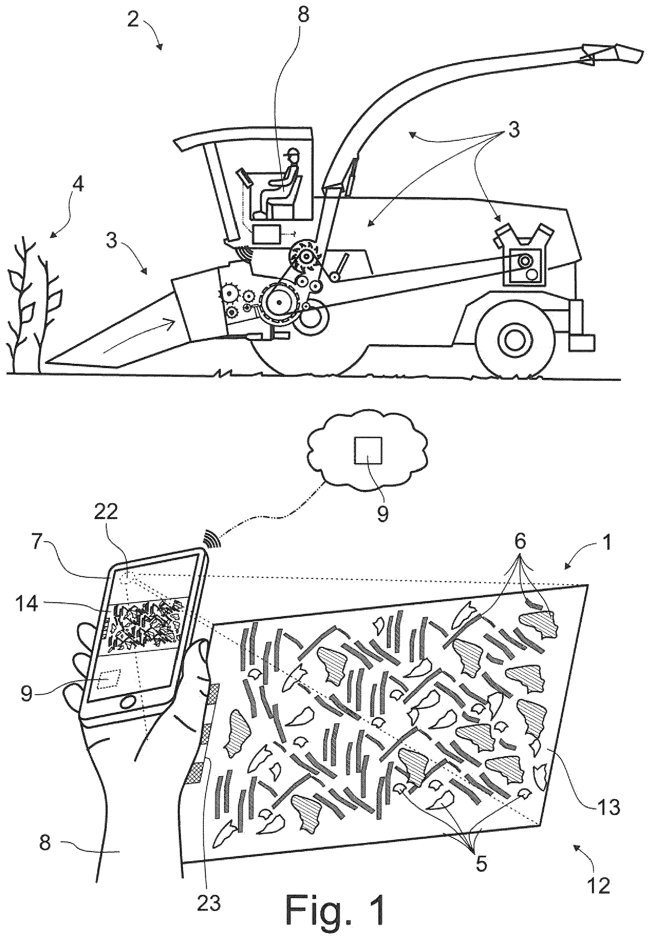

Der in Fig. 1 dargestellte Feldhäcksler 2 weist mindestens ein Arbeitsaggregat 3 zum Abernten eines Feldbestandes 4 und/oder zur Verarbeitung von Erntegut 1 des Feldbestandes 4 auf. Hier und vorzugsweise handelt es sich bei dem Feldbestand 4 um Maispflanzen.

Grundsätzlich kann vorgesehen sein, dass der Feldhäcksler 2 den Feldbestand 4 aberntet. Alternativ kann der Feldhäcksler 2 jedoch auch bereits abgeernteten Feldbestand 4 lediglich aufnehmen. Das so gewonnene Erntegut 1 wird sodann von dem Feldhäcksler 2 verarbeitet, insbesondere gehäckselt. Naturgemäß umfasst das Erntegut 1 Kornbestandteile 5 und Nicht-Kornbestandteile 6. Bei den Kornbestandteilen 5 kann es sich um Maiskörner der Maispflanzen handeln. Die Nicht-Kornbestandteile 6 können dann Blätter, Stängel und dergleichen der Maispflanze sein.

Im Einzelnen betrifft die vorschlagsgemäße Lehre ein Verfahren zur Bestimmung eines Indikators I für eine Aufbereitungsqualität eines landwirtschaftlichen Ernteguts 1 mittels eines Mobilgeräts 7.

Das Mobilgerät 7 kann beispielsweise ein Smartphone oder ein Tablet sein. Es zeichnet sich dadurch aus, dass es von einem Benutzer 8 mitgeführt und einfach verwendet werden kann. Vorzugsweise ist das Mobilgerät 7 kein dediziertes Gerät, sondern lässt sich allgemein auch in Lebenssituationen verwenden, die mit einer landwirtschaftlichen Tätigkeit nicht zusammenhängen.

Das Mobilgerät 7 weist hier eine Recheneinheit 9 auf und/oder kommuniziert mit einer Recheneinheit 9. Die Recheneinheit 9 kann also beispielsweise auch eine cloud-basierte Recheneinheit 9 sein. Alternativ kann es sich bei der Recheneinheit 9 beispielsweise um einen Teil des Smartphones handeln.

Wesentlich ist nun, dass die Recheneinheit 9 Bilddaten 10 einer vorbereiteten, Kornbestandteile 5 und Nicht-Kornbestandteile 6 umfassenden, Probe des Ernteguts 1 in einer Analyseroutine 11 analysiert, um den Indikator I für die Aufbereitungsqualität des Ernteguts 1 zu bestimmen.

Die vorbereitete Probe 12 des Ernteguts 1 wird im Folgenden noch näher erläutert. Es handelt sich dabei vorzugsweise um eine dünne, auf einem Brett 13 verteilte Schicht des Ernteguts 1, wie sie mit wenigen Handgriffen vorbereitet werden kann. Es ist somit beispielhaft so, dass der Benutzer 8 während einer Feldbearbeitung den Feldhäcksler 2 kurz anhält, beispielsweise zwei Handvoll Erntegut 1 aus einem Erntegutbehälter entnimmt, diese auf einem mitgeführten Brett 13 verteilt, mittels seines Smartphones ein Bild 14 aufnimmt und dieses von dem Smartphone analysieren lässt. Der gesamte Vorgang kann in wenigen Minuten abgeschlossen werden. Anschließend kann der Benutzer 8 direkt Änderungen am Feldhäcksler 2 vornehmen, sofern gewünscht.

Wesentlich ist weiterhin, dass die Recheneinheit 9 in der Analyseroutine 11 ein trainiertes Maschinenlernmodell 15 anwendet, um zumindest einen Schritt der Bestimmung des Indikators I für die Aufbereitungsqualität des Ernteguts 1 durchzuführen. Bei dem trainierten Maschinenlernmodell 15 kann es sich beispielsweise um ein trainiertes neuronales Netzwerk handeln. Bevorzugte Ausführungsbeispiele werden im Folgenden noch angegeben. Ein wesentlicher Vorteil des vorschlagsgemäßen Verfahrens ist, dass die vorbereitete Probe 12 des Ernteguts 1 nicht in Kornbestandteile 5 und Nicht-Kornbestandteile 6 separiert werden muss.

Hier und vorzugsweise sind die Kornbestandteile 5 Maiskornbestandteile. Zusätzlich oder alternativ kann der Indikator I für die Aufbereitungsqualität ein Indikator I für die Aufbereitungsqualität der Kornbestandteile 5 sein. Vorzugsweise ist der Indikator I für die Aufbereitungsqualität ein Indikator I für den Kornaufschluss, der weiter vorzugsweise mit dem Corn-Silage-Processing-Score korreliert. Das vorschlagsgemäße Verfahren dient also vorzugsweise der Approximation des CSPS.

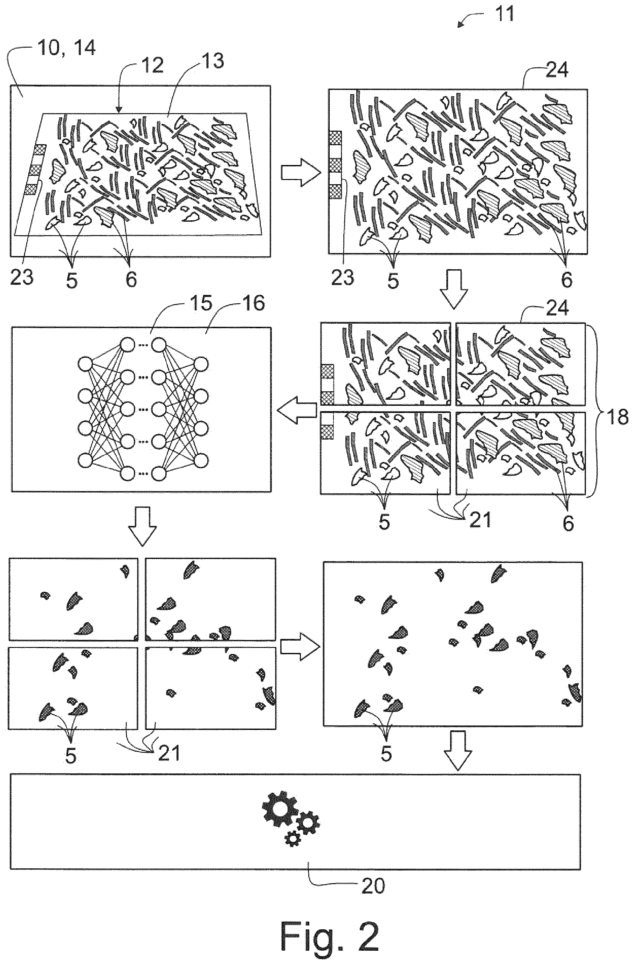

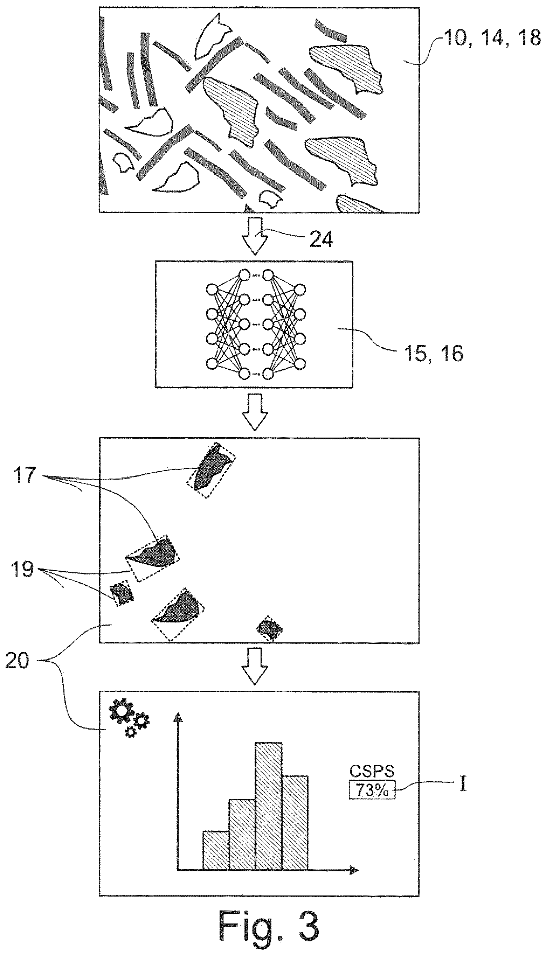

Mit Hinblick auf die Figuren 2 und 3 wird nun die Analyseroutine 11 betrachtet. Es kann vorgesehen sein, dass die Recheneinheit 9 in der Analyseroutine 11 einen Klassifikationsschritt 16 auf den Bilddaten 10 durchführt. In dem Klassifikationsschritt 16 ermittelt die Recheneinheit 9 Kornbestandteilen 5 zugeordneten Bildregionen 17 aus Eingangsdaten 18. Die Eingangsdaten 18 können im einfachsten Fall die Bilddaten 10 selbst sein und basieren generell auf den Bilddaten 10. Sie können in einem noch zu erläuternden Vorverarbeitungsschritt 24 aus den Bilddaten 10 ermittelt werden.

Die Bildregionen 17 können grundsätzlich einzelne Pixel, Pixelgruppen, Rechtecke 19, Polygone usw. sein.

Vorzugsweise wendet die Recheneinheit 9 in dem Klassifikationsschritt 16 das trainierte Maschinenlernmodell 15 an, um aus den Bilddaten 10 die den Kornbestandteilen 5 zugeordneten Bildregionen 17 zu ermitteln. Die Zweiteilung der Analyseroutine 11 in den Klassifikationsschritt 16 und einem noch zu erläuternden Analyseschritt 20 wird in Fig. 3 visualisiert.

Hier und vorzugsweise ist vorgesehen, dass das trainierte Maschinenlernmodell 15 bei seiner Anwendung eine semantische Segmentierung der Bilddaten 10 durchführt. Bei einer semantischen Segmentierung werden auf bekannte Art und Weise Pixel oder Pixelgruppen unterschiedlichen Klassen zugeordnet. Eine Trennung unterschiedlicher Instanzen der Klassen findet nicht statt. Hier und vorzugsweise wendet die Recheneinheit 9 in dem Klassifikationsschritt 16 das trainierte Maschinenlernmodell 15 auf die Bilddaten 10 an und ordnet Pixeln, insbesondere allen Pixeln, der Bilddaten 10 eine Klasse zu. Eine der Klassen ist dabei Kornbestandteilen 5 zugeordnet.

Vorzugsweise ordnet das Maschinenlernmodell 15 die Pixel höchstens dreißig unterschiedlichen Klassen, vorzugsweise höchstens acht unterschiedlichen Klassen, weiter vorzugsweise genau drei oder genau zwei unterschiedlichen Klassen zu. Dabei kann vorgesehen sein, dass eine Klasse Nicht-Kornbestandteilen 6 des Ernteguts 1 zugeordnet ist oder die Klassen "Kornbestandteile" und "Hintergrund" sind. Die letztgenannte Möglichkeit ist in Figur 3 gezeigt. Dort wird exemplarisch in einem Bild 14 eine semantische Segmentierung in die Klassen "Kornbestandteile" und "Hintergrund" durchgeführt. Nach der semantischen Segmentierung sind daher nur noch Informationen darüber vorhanden, welche Pixel Kornbestandteilen 5 zugeordnet sind.

Die Recheneinheit 9 kann aus den Pixeln, die Kornbestandteilen 5 zugeordnet sind, die den Kornbestandteilen 5 zugeordneten Bildregionen 17 ermitteln oder die den Kornbestandteilen 5 zugeordneten Pixel können die den Kornbestandteilen 5 zugeordneten Bildregionen 17 sein.

Die Anwendung der semantischen Segmentierung, insbesondere mit wenigen unterschiedlichen Klassen, ermöglicht die Nutzung eines effizienten und wenig komplexen Maschinenlernmodells 15. Dies ist insbesondere der Genauigkeit zuträglich und ermöglicht eine wenig rechenintensive Anwendung, beispielsweise auf dem Mobilgerät 7.

Im Anschluss an den Klassifikationsschritt 16 kann wie in Fig. 3 dargestellt ein Analyseschritt 20 vorgesehen sein. Hier und vorzugsweise führt die Recheneinheit 9 in der Analyseroutine 11 einen Analyseschritt 20 auf den den Kornbestandteilen 5 zugeordneten Bildregionen 17 durch. In dem Analyseschritt 20 ermittelt die Recheneinheit 9 je mindestens eine geometrische Eigenschaft, insbesondere einen Größenwert, der Bildregion 17. Aus den geometrischen Eigenschaften ermittelt die Recheneinheit 9 den Indikator I für die Aufbereitungsqualität.

Während der Ernte kann ein Benutzer 8 das vorschlagsgemäße Verfahren nutzen, um einen Überblick über die Effektivität der eingestellten Maschinenparameter des Feldhäckslers 2 zu erhalten und gegebenenfalls nachzusteuern. Im Vergleich zu bekannten Laborverfahren wie der Bestimmung des CSPS im Labor wird so eine Änderung der Maschinenparameter schon im laufenden Betrieb mit wenig Zeitaufwand ermöglicht.

Die geometrischen Eigenschaften umfassen hier und vorzugsweise geometrische Abmessungen der Kornbestandteile 5. Die geometrischen Abmessungen können eine kürzeste Seitenlänge und/oder eine größte Seitenlänge und/oder eine Querschnittsfläche umfassen. So werden hier und vorzugsweise Kornbestandteile 5 mit höchstens einer bestimmten maximalen kürzesten Seitenlänge als zerkleinert betrachtet und gehen in den Indikator I für die Aufbereitungsqualität ein.

Der Indikator I für die Aufbereitungsqualität kann einen Anteil an Kornbestandteilen 5 mit vorbestimmten geometrischen Eigenschaften an dem Erntegut 1 oder den Kornbestandteilen 5 abbilden.

Hier und vorzugsweise sind die Bildregionen 17 Rechtecke 19 oder ermittelt die Recheneinheit 9 aus den Bildregionen 17 Rechtecke 19. Vorzugsweise sind die Rechtecke 19 minimale umgebende Rechtecke. Unter einem minimalen umgebenden Rechteck wird hier das kleinste Rechteck in beliebiger zweidimensionaler Orientierung verstanden, das die erkannten Pixel des jeweiligen Kornbestandteils 5 vollständig einschließt. Hier und vorzugsweise ist die geometrische Eigenschaft, insbesondere der Größenwert, auf die Rechtecke 19 bezogen. Die geometrische Eigenschaft, insbesondere der Größenwert, kann jeweils eine Länge einer kleinsten Hauptachse der Rechtecke 19 sein.

Es wird üblicherweise so sein, dass die Kornbestandteile 5 bezogen auf die Bilddaten 10 relativ weit verteilt und selten sind. Nach der Ermittlung der zugehörigen Bildregionen 17 in dem Klassifikationsschritt 16 kann die weitere Analyse im Analyseschritt 20 daher relativ einfach sein. Es ist deshalb bevorzugt, dass der Analyseschritt 20 nicht auf einem Maschinenlernverfahren basiert. Die Recheneinheit 9 kann in dem Analyseschritt 20 eine Kantenerkennung zur Trennung der den Klassen "Kornbestandteile" und "Hintergrund" zugeordneten Pixel durchführen und vorzugsweise so die Rechtecke 19 ermitteln.

Den Indikator I der Aufbereitungsqualität kann die Recheneinheit 9 in dem Analyseschritt 20 als Summe der Fläche der Kornbestandteile 5 mit einem Größenwert, insbesondere der Länge der kleinsten Hauptachse der Rechtecke 19, unter einem Schwellwert als Anteil an der Gesamtfläche der Kornbestandteile 5 bestimmen. Der Schwellwert liegt hier und vorzugsweise zwischen 3 mm und 6 mm, vorzugsweise zwischen 4 mm und 5 mm und beträgt weiter vorzugsweise etwa 4,75 mm. Zusätzlich kann eine Offset-Korrektur und/oder eine Skalierung als Multiplikation mit einem Faktor vorgesehen sein. So wird der bekannte CSPS möglichst nachgebildet, wobei durch die Offset-Korrektur und/oder die Skalierung systematische Abweichungen berücksichtigt werden können. Diese können experimentell ermittelt werde.

Hier und vorzugsweise weist das trainierte Maschinenlernmodell 15 eine Anwendungsvorschrift und einen Trainingsdatensatz auf.

Allgemein wird unter einem trainierten Maschinenlernmodell 15 ein Maschinenlernmodell 15 verstanden, das bereits in einem Trainingsverfahren auf den Anwendungsfall trainiert wurde und im einfachsten Fall während der Anwendung nicht mehr dazu lernt. Das trainierte Maschinenlernmodell 15 weist einen Trainingsdatensatz, beispielsweise Gewichte der Neuronenverbindungen, und eine Anwendungsvorschrift auf. Die Anwendungsvorschrift beschreibt allgemein die zu verwendenden Rechenoperationen und der Trainingsdatensatz umfasst die in dem Trainingsverfahren ermittelten Parameter des Maschinenlernmodells 15 wie die Gewichte und ggfs. gelernte Hyperparameter.

Bezüglich des Trainingsdatensatzes und des Trainingsverfahrens wird auf die im Folgenden noch gemachten Ausführungen und insbesondere die Ausführungen zur weiteren Lehre des Trainingsverfahrens verwiesen.

Hier und vorzugsweise basiert die Anwendungsvorschrift auf einem convolutional neural network, insbesondere einem fully convolutional neural network. Der Trainingsdatensatz kann in einem Trainingsverfahren ermittelt worden sein oder werden.

Wie bereits erwähnt kann vorgesehen sein, dass der in Fig. 2 näher dargestellte Vorverarbeitungsschritt 24 von der Recheneinheit 9 in der Analyseroutine 11 durchgeführt wird, um aus den Bilddaten 10 die Eingangsdaten 18 zu ermitteln. Der Vorverarbeitungsschritt 24 kann ein Drehen eines Bildes 14 und/oder eine Korrektur einer Perspektive eines Bildes 14 und/oder ein Teilen eines Bildes 14 in mindestens zwei, vorzugsweise mindestens vier, Subbilder 21, und/oder eine Farbanpassung eines Bildes 14 und/oder eine Kontrastanpassung eines Bildes 14 umfassen. Im Anschluss an die Anwendung des trainierten Maschinenlernmodells 15 kann ein Zusammenfügen der Subbilder 21 vorgesehen sein.

Da vorliegend eine geometrische Eigenschaft einzelner Kornfragmente gesucht wird, sind im globaleren Kontext eines Bildes 14 wenige bis keine relevanten Informationen vorhanden. Durch das Teilen des Bildes 14 in mehrere Subbilder 21 kann daher ein kleineres neuronales Netzwerk verwendet werden, wodurch die Rechenkomplexität der Anwendung sinkt. Insbesondere die Korrektur der Perspektive ermöglicht es dem Benutzer 8, bei der Aufnahme des Bildes 14 nicht zu viel Acht darauf geben zu müssen, dieses aus einer vorgegebenen Perspektive aufzunehmen. Die Bestimmung der geometrischen Eigenschaften und die Anwendung eines spezifischen trainierten Maschinenlernmodells 15, insbesondere nur zur semantischen Segmentierung, sind durch eine Korrektur der Perspektive einfacher möglich.

Grundsätzlich kann die Recheneinheit 9 mehrere Recheneinheiten 9 aufweisen und mehrere Geräte umspannen. Hier und vorzugsweise weist die Recheneinheit 9 eine Mobilgerät-Recheneinheit und eine Server-Recheneinheit auf. Es kann vorgesehen sein, dass die Server-Recheneinheit die Analyseroutine 11 zumindest teilweise durchführt, oder, dass die Recheneinheit 9, vorzugsweise nur, die Mobilgerät-Recheneinheit aufweist und die Mobilgerät-Recheneinheit die Analyseroutine 11 vollständig durchführt. Bei der ersten Alternative kann durch die Nutzung einer Cloud beispielsweise eine höhere Rechenleistung zur Verfügung stehen während bei der zweiten Alternative die Analyseroutine 11 potenziell schneller abgeschlossen ist und ggfs. vollständig offline und auch bei schlechter Internetverbindung durchgeführt werden kann.

Hier und vorzugsweise ist vorgesehen, dass die Bilddaten 10 mehrere Bilder 14 umfassen. Diese mehreren Bilder 14 sind vorzugsweise Bilder 14 unterschiedlicher vorbereiteter Proben. Eine übliche Laborprobe umfasst häufig 500 g Erntegut 1. In einem Bild 14 lässt sich mit überschaubarem Aufwand nur eine deutlich kleinere Menge Erntegut 1 abbilden. Für eine statistische Sicherheit bei der Ermittlung des Indikators I für die Aufbereitungsqualität ist es daher vorteilhaft, wenn die Bilddaten 10 mindestens 100, vorzugsweise mindestens 150, weiter vorzugsweise mindestens 200 Kornpartikel aufweisen. Hier und vorzugsweise ist vorgesehen, dass das Mobilgerät 7 eine Warnung an den Benutzer 8 ausgibt, wenn zu wenige Kornpartikel in den Bilddaten 10 erkannt wurden. Die Grenze kann dabei vorzugsweise in einem Bereich unter 200 Kornpartikel, vorzugsweise unter 150, noch weiter vorzugsweise unter 100 Kornpartikeln liegen. Vorzugsweise liegt die Grenze, ab der eine Warnung an den Benutzer 8 ausgegeben wird, in einem Bereich über 50 Kornpartikeln. Als Reaktion auf die Warnung kann vorgesehen sein, dass der Benutzer 8 die Möglichkeit erhält, weitere Bilder 14 den Bilddaten 10 hinzuzufügen.

Generell kann vorgesehen sein, dass das Mobilgerät 7 eine Kamera 22 aufweist und der Benutzer 8 ein oder mehrere Bilder 14 der Bilddaten 10 mittels der Kamera 22 aufnimmt. Allgemein umfassen die Bilddaten 10 hier und vorzugsweise im sichtbaren Lichtbereich aufgenommene Bilder 14, wie sie von handelsüblichen Smartphones produziert werden. Insbesondere umfassen die Bilddaten 10 an Bildern 14 nur Bilder 14, die im sichtbaren Bereich aufgenommen wurden.

Vorzugsweise nimmt der Benutzer 8 mehrere Bilder 14 unterschiedlicher vorbereiteter Proben auf, die die Recheneinheit 9 in der Analyseroutine 11 zusammen als Bilddaten 10 analysiert. Vorzugsweise werden dabei die geometrischen Eigenschaften der Bildregionen 17, die den Kornbestandteilen 5 zugeordnet sind, aus mehreren Bildern 14 in einer statistischen Analyse zur Ermittlung des Indikators I für die Aufbereitungsqualität verwendet.

Die vorbereitete Probe 12 kann eine Probe auf einem definierten Hintergrund sein. Dieser definierte Hintergrund kann beispielsweise ein zu dem Feldhäcksler 2 gehöriges Brett 13 sein. Der definierte Hintergrund, insbesondere das Brett 13, kann eine Größenreferenz 23 und/oder eine definierte Farbe aufweisen. Vorzugsweise ist es dann so, dass die Recheneinheit 9 auf Basis der Größenreferenz 23 die geometrische Eigenschaft, insbesondere den Größenwert, ermittelt. Die Farbe kann eine Farbe sein, die in dem Erntegut 1 so nicht vorkommt, beispielsweise ein Blauton. Das Brett 13 kann beispielsweise Seitenlängen von 10 bis 50 cm aufweisen.

Ganz allgemein kann zusätzlich vorgesehen sein, dass der Indikator I für die Aufbereitungsqualität zusätzlich oder alternativ die Menge an Nicht-Kornbestandteilen 6 mit einer Überlänge betrifft. Eine Überlänge ist dabei eine Länge eines Partikels, die über einem vorgegebenen Schwellwert liegt. Der Schwellwert kann abhängig von den Maschinenparametern des Feldhäckslers 2 sein. Überlange Partikel können bei einer Silage zu Luftblasen und einer Pilz- oder Schimmelbildung führen.

Es kann vorgesehen sein, dass das Mobilgerät 7 dem Benutzer 8 den Indikator I für die Aufbereitungsqualität anzeigt.

Nach einer weiteren Lehre, der eigenständige Bedeutung zukommt, wird ein Trainingsverfahren zur Erzeugung eines Trainingsdatensatzes eines Maschinenlernmodells mittels einer Recheneinheit zur Verwendung in dem vorschlagsgemäßen Verfahren vorgeschlagen. Die Recheneinheit erzeugt dabei in einem Trainingsschritt mittels einer Trainingsvorschrift basierend auf Trainingsdaten den Trainingsdatensatz. Die Trainingsdaten können annotierte Bilder von vorbereiteten Proben umfassen. Die Recheneinheit kann in der Trainingsvorschrift eine Kostenfunktion anwenden. Derartige Trainingsschritte sind grundsätzlich bekannt.

Diese Recheneinheit kann eine GPU sein und muss insbesondere nicht die Recheneinheit des Mobilgeräts 7 sein. Auch zeitlich kann das Trainingsverfahren von dem vorschlagsgemäßen Verfahren entkoppelt sein. Vorzugsweise wird ein Trainingsdatensatz bei vielen Anwendungen des vorschlagsgemäßen Verfahrens verwendet.

Die Nutzung einer Kostenfunktion in dem Training eines Maschinenlernmodells 15 ist soweit bekannt. Sie bestimmt wie die trainierbaren Parameter des Maschinenlernmodells 15 in dem Training angepasst werden. Die Auswahl einer guten Kostenfunktion trägt häufig maßgeblich zum Gelingen des Trainings bei.

Es kann vorgesehen sein, dass die Kostenfunktion eine dice-loss-Funktion ist. Zusätzlich oder alternativ kann die Kostenfunktion eine Abweichung des Indikators I für die Aufbereitungsqualität von einem Referenz-Indikator I für die Aufbereitungsqualität berücksichtigen.

Übliche Kostenfunktionen betrachten häufig die absolute Anzahl der Treffer des Maschinenlernmodells 15. Da vorliegend jedoch wenige den Kornbestandteilen 5 zugeordnete Pixel auf viele Hintergrund-Pixel kommen, würde auch ein Maschinenlernmodell 15, das alle Pixel als Hintergrund klassifiziert, relativ geringe Kosten bei einer üblichen Kostenfunktion erzeugen. Um dem entgegenzuwirken ist beispielsweise die dice-loss-Kostenfunktion vorteilhaft.

Es ist hier jedoch so, dass es bevorzugt nicht darauf ankommt, jeden Pixel eines Kornbestandteils 5 korrekt zuzuordnen, sondern das Maschinenlernmodell 15 darauf trainiert werden soll, insgesamt nah an den CSPS zu gelangen. Wenn dabei einige Randpixel eines Kornbestandteils 5 nicht berücksichtigt werden, kann dieser Effekt vernachlässigbar sein. Es kann daher vorgesehen sein, dass die Kostenfunktion darauf basiert, während des Trainings unter Zugrundelegung des aktuellen Trainingsstandes den Indikator I für die Aufbereitungsqualität zu berechnen und mit einem Referenz-Indikator für die Aufbereitungsqualität aus den Trainingsdaten zu vergleichen. So kann erreicht werden, dass das optimale Ergebnis des Trainings möglichst nah am CSPS liegt, statt auf eine gegebenenfalls unerreichbare Perfektion der semantischen Segmentierung zu optimieren.

Es kann somit vorgesehen sein, dass eine Abweichung des Indikators I für die Aufbereitungsqualität unter Zugrundelegung eines aktuellen Trainingsstandes von einem Referenz-Indikator für die Aufbereitungsqualität berechnet wird. Diese Abweichung kann in die Kostenfunktion einfließen. Dabei hat sich insbesondere die Nutzung eines Callbacks zur regelmäßigen Berücksichtigung der Abweichung in der Kostenfunktion als vorteilhaft herausgestellt.

Wie bereits erläutert wurde, kann vorliegend ein Maschinenlernmodell 15 mit einer nicht zu hohen Komplexität verwendet werden. Bevorzugt ist, dass das Maschinenlernmodell 15 mindestens 4 Millionen, vorzugsweise mindestens 5 Millionen, weiter vorzugsweise mindestens 6 Millionen, und/oder höchstens 15 Millionen, vorzugsweise höchstens 12 Millionen, weiter vorzugsweise höchstens 9 Millionen trainierbare Parameter aufweist. Als gut anwendbar hat sich beispielsweise ein Efficientnetb1 auf Tensorflow oder Tensorflow light Basis erwiesen. Als Architektur wird ein UNET bevorzugt.

Hier und vorzugsweise wird der Indikator I für die Aufbereitungsqualität und/oder eine statistische Sicherheit des Indikators für die Aufbereitungsqualität I, insbesondere eine Menge an detektierten Kornpartikeln, einem Benutzer 8 angezeigt. Grundsätzlich kann dabei dem Benutzer 8 auch eine statistische Sicherheit des Indikators für die Aufbereitungsqualität I angezeigt werden, die aus den Bilddaten 10 ermittelt werden kann. Dafür kann einfacherweise eine Menge an detektierten Kornpartikeln genutzt werden. Ist diese Menge unter einem vorgegebenen Grenzwert, kann dem Benutzer 8 empfohlen werden, ein weiteres Bild 14 aufzunehmen.

Grundsätzlich wird für das Trainingsverfahren auf alle Ausführungen zu dem vorschlagsgemäßen Verfahren und für das vorschlagsgemäße Verfahren auf alle Ausführungen zu dem Trainingsverfahren verwiesen.

Nach einer weiteren Lehre, der ebenfalls eigenständige Bedeutung zukommt, wird ein Speichermedium mit einem darauf gespeicherten Trainingsdatensatz erzeugt mittels eines vorschlagsgemäßen Trainingsverfahrens zur Verwendung in einem vorschlagsgemäßen Verfahren vorgeschlagen. Auf alle Ausführungen zu dem vorschlagsgemäßen Trainingsverfahren und dem vorschlagsgemäßen Verfahren darf verwiesen werden.

Nach einer weiteren Lehre, der ebenfalls eigenständige Bedeutung zukommt, wird eine Recheneinheit 9 eingerichtet zur Durchführung des Analyseschritts 20 und/oder der Analyseroutine 11 und/oder des vorschlagsgemäßen Trainingsverfahrens vorgeschlagen. Auf alle Ausführungen zu dem vorschlagsgemäßen Verfahren und dem vorschlagsgemäßen Trainingsverfahren darf verwiesen werden.

Nach einer weiteren Lehre, der eigenständige Bedeutung zukommt, wird ein Mobilgerät 7 eingerichtet zur Verwendung in einem vorschlagsgemäßen Verfahren vorgeschlagen. Auf alle Ausführungen zu dem vorschlagsgemäßen Verfahren darf verwiesen werden.

### Zusammenfassung

- 1: Erntegut
- 2: Feldhäcksler
- 3: Arbeitsaggregat
- 4: Feldbestand
- 5: Kornbestandteile
- 6: Nicht-Kornbestandteile
- 7: Mobilgerät
- 8: Benutzer
- 9: Recheneinheit
- 10: Bilddaten
- 11: Analyseroutine
- 12: Probe
- 13: Brett
- 14: Bild
- 15: trainiertes Maschinenlernmodell
- 16: Klassifikationsschritt
- 17: Bildregionen
- 18: Eingangsdaten
- 19: Rechtecke
- 20: Analyseschritt
- 21: Subbilder
- 22: Kamera
- 23: Größenreferenz
- 24: Vorverarbeitungsschritt
- I: Indikator

## Patentansprüche

1. Verfahren zur Bestimmung eines Indikators (I) für eine Aufbereitungsqualität eines landwirtschaftlichen Ernteguts (1) mittels eines Mobilgeräts (7), insbesondere eines Smartphones oder Tablets,
wobei das Mobilgerät (7) eine Recheneinheit (9) aufweist und/oder mit der Recheneinheit (9) kommuniziert,
**dadurch gekennzeichnet,**
**dass** die Recheneinheit (9) Bilddaten (10) einer vorbereiteten, Kornbestandteile (5) und Nicht-Kornbestandteile (6) umfassenden, Probe des Ernteguts (1) in einer Analyseroutine (11) analysiert, um den Indikator (I) für die Aufbereitungsqualität des Ernteguts (1) zu bestimmen und
**dass** die Recheneinheit (9) in der Analyseroutine (11) ein trainiertes Maschinenlernmodell (15) anwendet, um zumindest einen Schritt der Bestimmung des Indikators (I) für die Aufbereitungsqualität des Ernteguts (1) durchzuführen.

2. Verfahren nach Anspruch 1 **dadurch gekennzeichnet, dass** die Kornbestandteile (5) Maiskornbestandteile sind, und/oder, dass der Indikator (I) für die Aufbereitungsqualität ein Indikator (I) für die Aufbereitungsqualität der Kornbestandteile (5) ist, vorzugsweise ein Indikator (I) für den Kornaufschluss, weiter vorzugsweise, dass der Indikator (I) für die Aufbereitungsqualität mit dem Corn-Silage-Processing-Score korreliert.

3. Verfahren nach Anspruch 1 oder 2 **dadurch gekennzeichnet, dass** die Recheneinheit (9) in der Analyseroutine (11) einen Klassifikationsschritt (16) auf den Bilddaten (10) durchführt, dass die Recheneinheit (9) in dem Klassifikationsschritt (16) Kornbestandteilen (5) zugeordnete Bildregionen (17) aus auf den Bilddaten (10) basierenden Eingangsdaten (18) ermittelt, vorzugsweise, dass die Recheneinheit (9) in dem Klassifikationsschritt (16) das trainierte Maschinenlernmodell (15) anwendet, um aus den Bilddaten (10) die den Kornbestandteilen (5) zugeordneten Bildregionen (17) zu ermitteln.

4. Verfahren nach Anspruch 3 **dadurch gekennzeichnet, dass** das trainierte Maschinenlernmodell (15) bei seiner Anwendung eine semantische Segmentierung der Bilddaten (10) durchführt, dass die Recheneinheit (9) in dem Klassifikationsschritt (16) das trainierte Maschinenlernmodell (15) auf die Bilddaten (10) anwendet und Pixeln, insbesondere allen Pixeln, der Bilddaten (10) eine Klasse zuordnet, dass eine Klasse Kornbestandteilen (5) zugeordnet ist, vorzugsweise, dass das Maschinenlernmodell (15) die Pixel höchstens 30 unterschiedlichen Klassen, vorzugsweise höchstens 8 unterschiedlichen Klassen, weiter vorzugsweise genau 3 oder genau 2 unterschiedlichen Klassen zuordnet, weiter vorzugsweise, dass eine Klasse Nicht-Kornbestandteilen (6) des Ernteguts (1) zugeordnet ist oder die Klassen "Kornbestandteile" und "Hintergrund" sind.

5. Verfahren nach Anspruch 3 oder 4 **dadurch gekennzeichnet, dass** die Recheneinheit (9) in der Analyseroutine (11) einen Analyseschritt (20) auf den den Kornbestandteilen (5) zugeordneten Bildregionen (17) durchführt, dass die Recheneinheit (9) in dem Analyseschritt (20) je mindestens eine geometrische Eigenschaft, insbesondere einen Größenwert, der Bildregionen (17) ermittelt und aus den geometrischen Eigenschaften den Indikator (I) für die Aufbereitungsqualität ermittelt, vorzugsweise, dass die Bildregionen (17) Rechtecke (19) sind oder die Recheneinheit (9) aus den Bildregionen (17) Rechtecke (19) ermittelt, weiter vorzugsweise dass die Rechtecke (19) minimale umgebende Rechtecke sind, dass die geometrische Eigenschaft, insbesondere der Größenwert, auf die Rechtecke (19) bezogen ist, insbesondere jeweils eine Länge einer kleinste Hauptachse der Rechtecke (19) ist.

6. Verfahren nach Anspruch 5 **dadurch gekennzeichnet, dass** der Analyseschritt (20) nicht auf einem Maschinenlernverfahren basiert, vorzugsweise, dass die Recheneinheit (9) in dem Analyseschritt (20) eine Kantenerkennung zur Trennung der den Klassen "Kornbestandteile" und "Hintergrund" zugeordneten Pixel durchführt und vorzugsweise so die Rechtecke (19) ermittelt.

7. Verfahren nach Anspruch 5 oder 6 **dadurch gekennzeichnet, dass** die Recheneinheit (9) den Indikator (I) der Aufbereitungsqualität in dem Analyseschritt (20) als Summe der Fläche der Kornbestandteile (5) mit einem Größenwert, insbesondere der Länge der kleinsten Hauptachse der Rechtecke (19), unter einem Schwellwert als Anteil an der Gesamtfläche der Kornbestandteile (5) bestimmt, vorzugsweise, dass der Schwellwert zwischen 3 mm und 6 mm, vorzugsweise zwischen 4 mm und 5 mm, weiter vorzugsweise etwa 4,75 mm, beträgt.

8. Verfahren nach einem der vorhergehenden Ansprüche **dadurch gekennzeichnet, dass** das trainierte Maschinenlernmodell (15) eine Anwendungsvorschrift und einen Trainingsdatensatz aufweist, dass die Anwendungsvorschrift auf einem convolutional neural network, insbesondere einem fully convolutional neural network, basiert, und/oder, dass der Trainingsdatensatz in einem Trainingsverfahren ermittelt wurde oder wird.

9. Verfahren nach einem der Ansprüche 3 bis 8 **dadurch gekennzeichnet, dass** die Recheneinheit (9) in der Analyseroutine (11) einen Vorverarbeitungsschritt durchführt, um aus den Bilddaten (10) die Eingangsdaten (18) zu ermitteln, dass der Vorverarbeitungsschritt ein Drehen eines Bildes (14) und/oder eine Korrektur einer Perspektive eines Bildes (14) und/oder ein Teilen eines Bildes (14) in mindestens 2, vorzugsweise mindestens 4, Subbilder (21), und/oder eine Farbanpassung eines Bildes (14) und/oder eine Kontrastanpassung eines Bildes (14) umfasst.

10. Verfahren nach einem der vorhergehenden Ansprüche **dadurch gekennzeichnet, dass** die Recheneinheit (9) eine Mobilgerät-Recheneinheit und eine Server-Recheneinheit aufweist und dass die Server-Recheneinheit die Analyseroutine (11) zumindest teilweise durchführt, oder, dass die Recheneinheit (9), vorzugsweise nur, die Mobilgerät-Recheneinheit aufweist und die Mobilgerät-Recheneinheit die Analyseroutine (11) vollständig durchführt.

11. Verfahren nach einem der vorhergehenden Ansprüche **dadurch gekennzeichnet, dass** die Bilddaten (10) mehrere Bilder (14) umfassen, vorzugsweise, dass das Mobilgerät (7) eine Kamera (22) aufweist, und der Benutzer (8) ein oder mehrere Bilder (14) der Bilddaten (10) mittels der Kamera (22) aufnimmt, weiter vorzugsweise, dass der Benutzer (8) mehrere Bilder (14) unterschiedlicher vorbereiteter Proben aufnimmt, die die Recheneinheit (9) in der Analyseroutine (11) zusammen als Bilddaten (10) analysiert.

12. Verfahren nach einem der vorhergehenden Ansprüche **dadurch gekennzeichnet, dass** die vorbereitete Probe (12) eine Probe auf einem definierten Hintergrund ist, vorzugsweise, dass der definierte Hintergrund eine Größenreferenz (23) und/oder eine definierte Farbe aufweist, weiter vorzugsweise, dass die Recheneinheit (9) auf Basis der Größenreferenz (23) die geometrische Eigenschaft, insbesondere den Größenwert, ermittelt.

13. Trainingsverfahren zur Erzeugung eines Trainingsdatensatzes eines Maschinenlernmodells (15) mittels einer Recheneinheit (9) zur Verwendung in einem Verfahren nach einem der vorhergehenden Ansprüche, wobei die Recheneinheit (9) in einem Trainingsschritt mittels einer Trainingsvorschrift basierend auf Trainingsdaten den Trainingsdatensatz erzeugt, wobei die Trainingsdaten annotierte Bilddaten (10) von vorbereiteten Proben umfassen und/oder die Recheneinheit (9) in der Trainingsvorschrift eine Kostenfunktion anwendet.

14. Trainingsverfahren nach Anspruch 13 **dadurch gekennzeichnet, dass** die Kostenfunktion eine dice-loss Funktion ist, und/oder, dass die Kostenfunktion eine Abweichung des Indikators (I) für die Aufbereitungsqualität von einem Referenz-Indikator (I) für die Aufbereitungsqualität berücksichtigt, vorzugsweise, dass eine Abweichung des Indikators (I) für die Aufbereitungsqualität unter Zugrundelegung eines aktuellen Trainingsstandes von einem Referenz-Indikator (I) für die Aufbereitungsqualität berechnet und mittels eines Callbacks regelmäßig in der Kostenfunktion berücksichtigt wird.

15. Trainingsverfahren nach Anspruch 13 oder 14 **dadurch gekennzeichnet, dass** das Maschinenlernmodell (15) mindestens 4 Millionen, vorzugsweise mindestens 5 Millionen, weiter vorzugsweise mindestens 6 Millionen, und/oder höchstens 15 Millionen, vorzugsweise höchstens 12 Millionen, weiter vorzugsweise höchstens 9 Millionen trainierbare Parameter aufweist.

16. Speichermedium mit einem darauf gespeicherten Trainingsdatensatz erzeugt mittels eines Trainingsverfahrens nach einem der Ansprüche 13 bis 15 zur Verwendung in einem Verfahren nach einem der Ansprüche 1 bis 12.

17. Recheneinheit eingerichtet zur Durchführung des Analyseschritts (20) und/oder der Analyseroutine (11) nach einem der Ansprüche 1 bis 12 und/oder des Trainingsverfahrens nach einem der Ansprüche 13 bis 15.

18. Mobilgerät eingerichtet zur Verwendung in einem Verfahren nach einem der Ansprüche 1 bis 12.
